Europäisches Patentamt

European Patent Office

Office européen des brevets

(11) Veröffentlichungsnummer: **0 394 777**
**A2**

## (12) EUROPÄISCHE PATENTANMELDUNG

(21) Anmeldenummer: **90107112.6**

(22) Anmeldetag: **12.04.90**

(51) Int. Cl.5: **B60S 3/00, C02F 1/44**

(30) Priorität: **27.04.89 DE 3913920**

(43) Veröffentlichungstag der Anmeldung:
**31.10.90 Patentblatt 90/44**

(84) Benannte Vertragsstaaten:
**AT BE CH DE DK ES FR GB GR IT LI LU NL SE**

(71) Anmelder: **Alfred Kärcher GmbH & Co.**
**Alfred-Kärcher-Strasse 28-40**
**D-7057 Winnenden(DE)**

(72) Erfinder: **Nieuwkamp, Wolfgang**
**Hessigheimer Strasse 35**
**D-7150 Backnang(DE)**

(74) Vertreter: **Hoeger, Stellrecht & Partner**
**Uhlandstrasse 14 c**
**D-7000 Stuttgart 1(DE)**

(54) Waschanlage für Kraftfahrzeuge.

(57) Um in Kraftfahrzeugwaschanlagen eine möglichst fleckfreie Spülung vorzusehen, wird eine Waschanlage für Kraftfahrzeuge mit einer Spülwasserentsalzung vorgesehen, die gekennzeichnet ist durch eine Umkehrosmose-Anlage, durch eine das zu entsalzende Spülwasser dieser Umkehrosmose-Anlage unter Druck zuführende Pumpe, durch eine das Konzentrat der Saugseite der Pumpe zuführende Rückführleitung, durch eine mit einem Schließventil verschließbare, von der Rückführleitung abzweigende Austragleitung, durch eine das Permeat aus der Umkehrosmose-Anlage entfernende Permeat-Leitung, durch eine ein der Leitfähigkeit des Permeats entsprechendes Signal erzeugende Leitfähigkeitsmeßeinrichtung und durch eine Steuerung, die das von der Leitfähigkeitsmeßeinrichtung erzeugte Signal mit einem Leitfähigkeits-Sollwert vergleicht und beim Überschreiten dieses Sollwertes ein das Schließventil in der Austragleitung öffnendes Signal erzeugt.

FIG.1

EP 0 394 777 A2

Die Erfindung betrifft eine Waschanlage für Kraftfahrzeuge mit einer Spülwasserentsalzung.

Es hat sich als günstig herausgestellt, in Kraftfahrzeug-Waschanlagen die Kraftfahrzeuge mit entsalztem Wasser zu spülen, um nach dem Abtrocknen der Kraftfahrzeuge Fleckenbildung durch zurückbleibende Salzreste zu vermeiden.

Es ist Aufgabe der Erfindung, eine Waschanlage für Kraftfahrzeuge derart auszubilden, daß mit möglichst geringem Wasser-und Energieverbrauch eine für die Spülung und fleckfreie Trocknung der Kraftfahrzeuge ausreichende Entsalzung erreicht werden kann.

Diese Aufgabe wird erfindungsgemäß durch eine Waschanlage für Kraftfahrzeuge mit einer Spülwasserentsalzung gelöst, die gekennzeichnet ist durch eine Umkehrosmose-Anlage, durch eine das zu entsalzende Spülwasser der Umkehrosmose-Anlage unter Druck zuführende Pumpe, durch eine das Konzentrat der Saugseite der Pumpe zuführende Rückführleitung, durch eine mit einem Schließventil verschließbare, von der Rückführleitung abzweigende Austragleitung, durch eine das Permeat aus der Umkehrosmose-Anlage entfernende Permeatleitung, durch eine ein der Leitfähigkeit des Permeats entsprechendes Signal erzeugende Leitfähigkeitsmeßeinrichtung und durch eine Steuerung, die das von der Leitfähigkeitsmeßeinrichtung erzeugte Signal mit einem Leitfähigkeits-Sollwert vergleicht und beim Überschreiten dieses Sollwertes ein das Schließventil in der Austragleitung öffnendes Signal erzeugt.

Bei einer solchen Anlage wird der Restsalzgehalt des aus der Umkehrosmose-Anlage austretenden Permeats durch eine Leitfähigkeitsmessung bestimmt und das aus der Umkehrosmose-Anlage austretende Konzentrat wird dem eintretenden Frischwasser so lange zugesetzt, bis der maximal tolerierbare Salzgehalt des Permeats erreicht wird. Wird dieser Salzgehalt überschritten, wird das Konzentrat solange verworfen, bis der Salzgehalt des Permeats wieder unter den gewünschten Grenzwert abgesunken ist. Diese Regelung setzt den Frischwasserverbrauch deutlich herab, da das Permeat durch diese Regelung nicht stärker entsalzt wird als es unbedingt notwendig ist, während andererseits aber auch mit Sicherheit verhindert wird, daß der tolerierbare Salzgehalt überschritten wird.

Bei einer ersten bevorzugten Ausführungsform kann vorgesehen sein, daß in der Rückführleitung ein Druckhalteventil angeordnet ist. Dieses führt dazu, daß der von der Pumpe erzeugte höhere Druck in der Umkehrosmose-Anlage aufrechterhalten wird.

Diese Anordnung ist konstruktiv relativ wenig aufwendig, sie hat jedoch zur Folge, daß beim Öffnen des Schließventils der Austragleitung der Druck in der Umkehrosmose-Anlage abfällt. Um derartige Druckschwankungen in der Umkehrosmose-Anlage zu vermeiden, wird bei einer zweiten bevorzugten Ausführungsform vorgesehen, daß die Austragleitung stromabwärts des Druckhalteventils von der Rückführleitung abzweigt und daß stromabwärts der Abzweigung der Austragleitung ein Rückschlagventil in der Rückführleitung vorgesehen ist. Damit erfolgt der Austrag im drucklosen Teil der Rückführleitung, wobei das Rückschlagventil verhindert, daß Frischwasser durch die Austragleitung austreten kann.

Zusätzlich kann bei dieser Ausführung vorgesehen sein, daß stromabwärts des Druckhalteventils eine verschließbare Spülleitung von der Rückführleitung abzweigt. Diese wird normalerweise nur dann aktiviert, wenn eine Spülung der Umkehrosmose-Anlage mit Frischwasser erwünscht ist, in diesem Falle stört der Druckabbau der Umkehrosmose-Anlage nicht.

Die nachfolgende Beschreibung bevorzugter Ausführungsformen der Erfindung dient im Zusammenhang mit der Zeichnung der näheren Erläuterung. Es zeigen:

Figur 1: eine schematische Ansicht eines ersten bevorzugten Ausführungsbeispiels einer Entsalzungsanlage für Spülwasser und

Figur 2: ein zweites bevorzugtes Ausführungsbeispiel einer Entsalzungsanlage für Spülwasser.

Die in der Zeichnung dargestellte Anlage ist Teil einer Kraftfahrzeug-Waschanlage, in der am Ende des Waschvorgangs eine Spülung des Kraftfahrzeuges vorgenommen wird, um Reinigungschemikalien vollständig vom Kraftfahrzeug zu entfernen. Das dazu verwendete Spülwasser wird aus üblichen Leitungswasser gewonnen, dem das in ihm enthaltene Mineralsalz zu einem erheblichen Teil entzogen wird.

Zur Durchführung dieser Entsalzung wird die in der Zeichnung beschriebene Entsalzungsanlage verwendet.

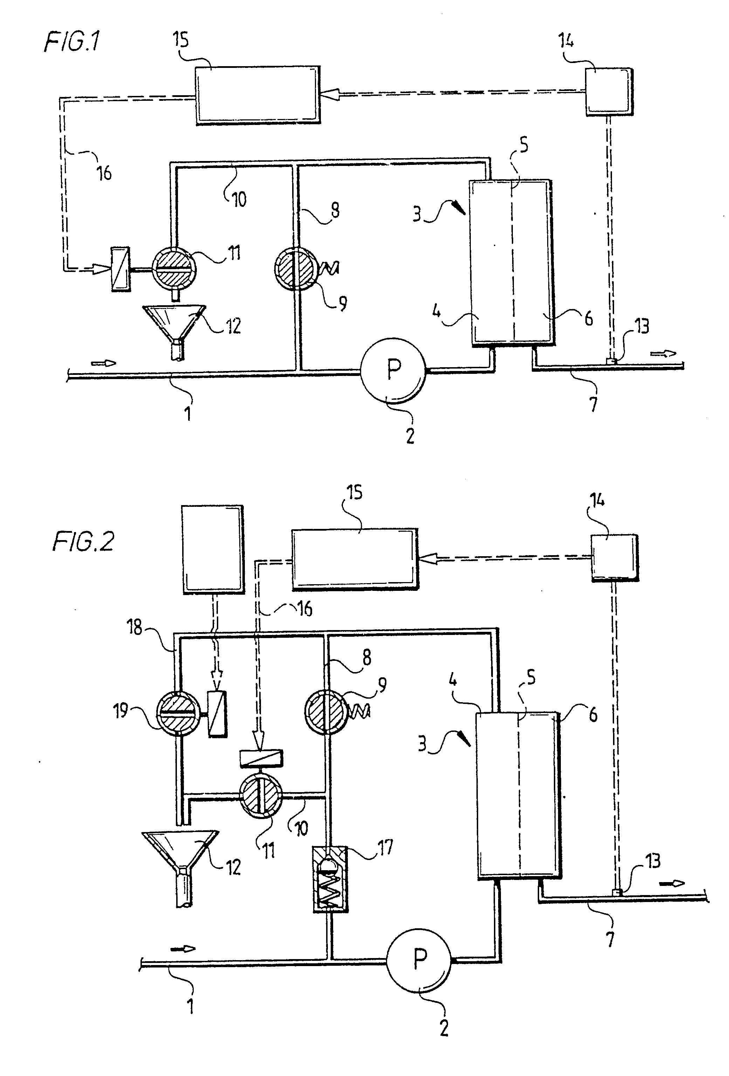

Bei dem in Figur 1 dargestellten Ausführungsbeispiel führt eine Frischwasserleitung 1 zur Saugseite einer Pumpe 2, die das durch die Frischwasserleitung 1 zugeführte Frischwasser unter Druck einer Umkehrosmose-Anlage 3 zuführt. In dieser ist ein Konzentrationsraum 4 über eine Membran 5 von einem Permeatraum 6 abgetrennt. Das in den Konzentrationsraum 4 eingeführte Frischwasser wird unter Druck durch die Membran 5 hindurchgedrückt, wobei das in dem Frischwasser enthaltene Salz zu einem erheblichen Teil zurückgehalten wird, das heißt das durch die Membran 5 hindurchgetretene Permeat hat einen deutlich niedrigeren Salzgehalt als das in den Konzentrationsraum eintretende Frischwasser.

Das Permeat wird über eine Permeatleitung 7 aus dem Permeatraum 6 seiner Verwendung in der Kraftfahrzeug-Waschanlage zugeführt, während das im Konzentrationsraum 4 anfallende Konzentrat, dessen Salzgehalt gegenüber dem Frischwasser noch erheblich erhöht ist, über eine Rückführleitung 8 wieder der Saugseite der Pumpe 2 zugeführt wird, so daß es sich mit dem durch die Frischwasserleitung 1 zugeführten Frischwasser vermischt und erneut in den Permeatraum 6 der Umkehrosmose-Anlage 3 gelangt.

In der Rückführleitung 8 befindet sich ein Druckhalteventil 9, welches in dem stromaufwärts gelegenen Teil der Rückführleitung 8 und in dem Konzentrationsraum 4 den von der Pumpe 2 erzeugten, gegenüber dem Druck in der Frischwasserleitung 1 höheren Druck aufrechterhält.

Von der Rückführleitung 8 zweigt in dem in Figur 1 dargestellten Ausführungsbeispiel stromaufwärts des Druckhalteventils 9 eine Austragleitung 10 ab, die mittels eines Schließventils 11 verschlossen ist und in einen Auslaß 12 einmündet.

Im Permeatraum 6 oder - wie im Ausführungsbeispiel der Figur 1 dargestellt - in der Permeatleitung 7 befindet sich ein Leitfähigkeitssensor 13, der ein der elektrischen Leitfähigkeit des Permeats entsprechendes elektrisches Signal erzeugt. Die Leitfähigkeit des Permeats hängt von dem verbleibenden Mineralsalzgehalt ab, so daß dieses Signal ein Maß für den Salzgehalt des Permeats darstellt. Der Leitfähigkeitssensor 13 ist Teil einer Leitfähigkeitsmeßeinrichtung 14, die ein Leitfähigkeitssignal einer Steuerschaltung 15 zuführt, in der dieses Signal mit einem fest eingestellten Sollwertsignal verglichen wird. Überschreitet das von der Leitfähigkeitsmeßeinrichtung 14 erzeugte Signal dieses Sollwertsignal, so ist dies ein Zeichen dafür, daß der Salzgehalt im Permeat einen bestimmten Grenzwert überschreitet. In diesem Fall erzeugt die Steuerschaltung 15 ein Steuersignal, das über eine Steuerleitung 16 dem Schließventil 11 zugeführt wird und dieses öffnet.

Die Öffnung führt dazu, daß das aus der Umkehrosmose-Anlage austretende Konzentrat zumindest teilweise über die Austragleitung 10 in den Auslaß 12 gelenkt wird, also den durch die Rückführleitung 8 gebildeten Kreislauf verläßt. Dadurch wird der relative Anteil des Frischwassers, der von der Pumpe 2 angesaugt wird, erhöht, das heißt insgesamt wird der Salzgehalt des zugeführten Wassers erniedrigt. Dies führt in der Umkehrosmose-Anlage 3 dazu, daß auch im Permeat der Salzgehalt wieder absinkt, bis der Salzgehalt den gewünschten Grenzwert wieder unterschritten hat. Dies wird von der Leitfähigkeitsmeßeinrichtung registriert, so daß das von ihr erzeugte Signal in der Steuerschaltung 15 wieder unter den Vergleichswert fällt und somit die Öffnung des Schließventils 11 beendet.

Auf diese Weise wird immer dann, wenn der Salzgehalt im Permeat einen vorbestimmten Grenzwert überschreitet, durch Verwerfung eines Teils des Konzentrats der Salzgehalt des der Umkehrosmose-Anlage zugeführten Wassers solange erniedrigt, bis auch im Permeat wieder der gewünschte, niedrigere Salzgehalt erreicht wird.

Auf diese Weise wird es möglich, einen sehr konstanten und dem gewünschten Salzgehalt genau entsprechenden Salzgehalt im Permeat aufrechtzuerhalten, und zwar unabhängig davon, welche Permeatmengen verbraucht werden und ob in der Frischwasserzufuhr gegebenenfalls Schwankungen des Salzgehalts auftreten. Dies führt insgesamt zu einer Minimierung des Wasser- und des Energieverbrauches.

Das in Figur 2 dargestellte Ausführungsbeispiel entspricht weitgehend dem der Figur 1, einander entsprechende Teile tragen daher dieselben Bezugszeichen.

Im Unterschied zu dem Ausführungsbeispiel der Figur 1 zweigt beim Ausführungsbeispiel der Figur 2 die Austragleitung 10 stromabwärts des Druckhalteventils 9 von der Rückführleitung 8 ab. In der Rückführleitung 8 befindet sich stromabwärts dieser Abzweigung zusätzlich ein Rückschlagventil 17, welches die Rückführleitung 8 entgegen ihrer üblichen Strömungsrichtung verschließt.

Bei dem Ausführungsbeispiel der Figur 1 wird der von der Pumpe aufgebaute, erhöhte Druck im Konzentrationsraum abgesenkt, sobald das Schließventil 11 geöffnet wird, während dies bei dem Ausführungsbeispiel der Figur 2 dadurch vermieden wird, daß die Austragleitung 10 stromabwärts des Druckhalteventils 9 abzweigt. Bei dem Ausführungsbeispiel der Figur 2 wird der Leitungsbereich zwischen der Pumpe 2 und dem Druckhalteventil 9 immer auf dem von der Pumpe erzeugten höheren Druck bleiben, auch wenn über die Austragleitung 10 Konzentrat verworfen wird. Das Rückschlagventil 17 hat dabei die Aufgabe, den Austritt von Frischwasser durch die geöffnete Austragleitung 10 zu vermeiden.

Es ist notwendig, die Umkehrosmose-Anlage von Zeit zu Zeit mit Frischwasser zu spülen, um deren Funktionsfähigkeit aufrechtzuerhalten. Dies kann bei dem Ausführungsbeispiel der Figur 1 in einfacher Weise dadurch erreicht werden, daß das Schließventil 11 unabhängig von dem von der Leitfähigkeitsmeßeinrichtung 14 zugeführten Signal geöffnet wird, so daß Frischwasser den Konzentrationsraum der Umkehrosmose-Anlage 3 durchströmt und in den Auslaß 12 verworfen wird.

Bei dem Ausführungsbeispiel der Figur 2 ist zu diesem Zweck eine spezielle Spülleitung 18 vorgesehen, die mit einem eigenen Schließventil 19 verschlossen ist. Diese Spülleitung 18 zweigt stromaufwärts des Druckhalteventils 9 von der Rückführleitung 8 ab und mündet ebenfalls in den Auslaß 12 ein. Wenn eine Spülung gewünscht wird, wird das Schließventil 19 geöffnet, so daß das von der Pumpe geförderte Frischwasser unmittelbar über die Spülleitung 18 zum Auslaß 12 gelangt. Dabei kann der auftretende Druckabfall ohne weiteres in Kauf genommen werden, da in dieser Betriebsphase kein Permeat erzeugt werden soll, sondern eine Spülung und Reinigung des Konzentrationsraumes 4 beabsichtigt ist. Es ist daher notwendig, daß in dieser Phase der Konzentrationsraum 4 mit relativ geringem Druck durchströmt wird.

Die Spülung des Konzentrationsraumes kann beispielsweise immer dann vorgenommen werden, wenn ein Permeatvorratsbehälter, der in der Zeichnung nicht dargestellt ist, gefüllt ist, so daß die Anlage nicht für die Aufbereitung neuen Permeats benötigt wird.

Eine entsprechende Füllstandsanzeige in dem Behälter kann bei dem Ausführungsbeispiel der Figur 1 das Schließventil 11 und bei dem Ausführungsbeispiel der Figur 2 das Schließventil 19 für eine bestimmte Zeit öffnen, so daß bei der Anlage automatisch eine Spülung erfolgt, wenn die Anlage nicht für die Permeataufbereitung benötigt wird.

**Ansprüche**

1. Waschanlage für Kraftfahrzeuge mit einer Spülwasserentsalzung, gekennzeichnet durch eine Umkehrosmose-Anlage (3), durch eine das zu entsalzende Spülwasser dieser Umkehrosmose-Anlage (3) unter Druck zuführende Pumpe (2), durch eine das Konzentrat der Saugseite der Pumpe (2) zuführende Rückführleitung (8), durch eine mit einem Schließventil (11) verschließbare, von der Rückführleitung (8) abzweigende Austragleitung (10), durch eine das Permeat aus der Umkehrosmose-Anlage (3) entfernende Permeatleitung (7), durch eine ein der Leitfähigkeit des Permeats entsprechendes Signal erzeugende Leitfähigkeitsmeßeinrichtung (13, 14) und durch eine Steuerung (15), die das von der Leitfähigkeitsmeßeinrichtung (13 14) erzeugte Signal mit einem Leitfähigkeits-Sollwert vergleicht und beim Überschreiten dieses Sollwertes ein das Schließventil (11) in der Austragleitung (10) öffnendes Signal erzeugt.

2. Waschanlage nach Anspruch 1, dadurch gekennzeichnet daß in der Rückführleitung (8) ein Druckhalteventil (9) angeordnet ist.

3. Waschanlage nach Anspruch 2, dadurch gekennzeichnet, daß die Austragleitung (10) stromaufwärts des Druckhalteventils (9) von der Rückführleitung (8) abzweigt.

4. Waschanlage nach Anspruch 2, dadurch gekennzeichnet, daß die Austragleitung (10) stromabwärts des Druckhalteventils (9) von der Rückführleitung (8) abzweigt und daß stromabwärts der Abzweigung der Austragleitung (10) ein Rückschlagventil (17) in der Rückführleitung (8) vorgesehen ist.

5. Waschanlage nach Anspruch 4, dadurch gekennzeichnet, daß stromaufwärts des Druckhalteventils (9) eine verschließbare Spülleitung (18) von der Rückführleitung (8) abzweigt.

FIG.1

FIG.2